Europäisches Patentamt

European Patent Office

Office européen des brevets

(19)

(11) Publication number: **0 342 827**
**A2**

## (12) EUROPEAN PATENT APPLICATION

(21) Application number: 89304534.4

(51) Int. Cl.4: **C09K 3/00**

(22) Date of filing: **05.05.89**

(30) Priority: **18.05.88 GB 8811754**

(43) Date of publication of application:
**23.11.89 Bulletin 89/47**

(84) Designated Contracting States:
**BE DE FR IT NL**

(71) Applicant: **THE MICANITE & INSULATORS COMPANY LIMITED**
**Westinghouse Road Trafford Park**
**Manchester, M17 1PR(GB)**

(72) Inventor: **Waddington, Fred Berry**
**21 grosvenor Road**
**Sale Cheshire(GB)**
Inventor: **Kallinicos, Andreas**
**278 Manor Avenue**
**Sale Cheshire(GB)**

(74) Representative: **Maury, Richard Philip**
**The General Electric Company p.l.c. G.E.C.**
**Patent Department (Wembley Office) Hirst**
**Research Centre East Lane**
**Wembley Middlesex HA9 7PP(GB)**

(54) **High vacuum pumping liquid and method.**

(57) In a method of high vacuum pumping in an environment which contains chemically aggressive substances such as halogen or other Lewis acid, ammonia, or high proportion of oxygen, the pumping liquid comprises one or more esters of general formula I:

$$R_2C(CH_2.O.CO.A)_2 \quad (I)$$

in which formula each R is independently $.CH_3$, $.C_2H_5$, $.CH_2.O.CO.A$ or $.CH_2.O.CH_2.CR'-(CH_2.O.CO.A)_2$ where $R'$ is $.CH_3$, $.C_2H_5$ or $.CH_2.O.CO.A$, and each A is independently alkyl (preferably tertiary alkyl) having 4 to 10 carbon atoms, together with 0.2% by weight of organic antioxidant having vapour pressure of the same order of magnitude as that of the ester.

The esters used in the invention are preferably esters of pentaerythritol, trimethylolpropane, ditrimethylolpropane and dipentaerythritol. The esterifying acids may be straight or branched chain alkanoic acids but are preferably highly sterically hindered acids, such as pivalic acid (trimethylacetic acid) and 2,2-dimethylpentanoic acid.

The antioxidant is preferably of the phenolic/amine mixed type containing amine and phenol in approximately equal stoichiometric amounts, for example 2% of alkylated N-phenyl-1-naphthylamine together with 0.5% of di-t-butyl-p-cresol ("butylated hydroxytoluene").

## High Vacuum Pumping Liquid and Method

This invention relates to a method of high vacuum pumping and to a pumping liquid therefor.

In high vacuum pumping with a pumping liquid, the pumping liquid may be subjected to aggressive chemical environments and to high temperatures. For example, operating temperatures in diffusion pumps may exceed 250°C and in rotary pumps hotspots of about 150°C may occur. Continual pumping may be required of atmospheres which contain ammonia or other chemically aggressive substances such as chlorine, fluorine and other Lewis acids or which contain a high proportion of oxygen at high pressure. Of known pumping liquids, only perfluoroethers have so far been regarded as sufficiently stable for use under such conditions. These are not only very expensive but may in certain cases also yield undesirable breakdown products or react with alkaline materials such as ammonia.

It has now been found, contrary to predictable chemical behaviour, that certain esters can be used as pumping liquids for high vacuum pumping in aggressive chemical environments.

According to the invention there is provided a method of high vacuum pumping with a pumping liquid in an environment which contains chemically aggressive substances such as halogen or other Lewis acids, ammonia, or a high proportion of oxygen, characterised in that the pumping liquid comprises one or more esters of general formula I:

$$R_2C(CH_2.O.CO.A)_2 \quad (I)$$

in which formula each R is independently $.CH_3$, $.C_2H_5$, $.CH_2O.CO.A$ or $.CH_2.O.CH_2.CR'-(CH_2.O.CO.A)_2$ where $R'$ is $.CH_3$, $.C_2H_5$ or $.CH_2.O.CO.A$, and each A is independently alkyl (preferably tertiary alkyl) having 4 to 10 carbon atoms, together with 0.2% to 2% by weight of organic antioxidant having vapour pressure of the same order of magnitude as that of the ester.

The esters used in the invention are preferably esters of pentaerythritol, trimethylolpropane, ditrimethylolpropane and dipentaerythritol. The esterifying acids may be straight or branched chain alkanoic acids but are preferably highly sterically hindered acids, such as pivalic acid (trimethylacetic acid) and 2,2-dimethylpentanoic acid.

Preferred esters are of higher molecular weight and have general formula II:

$$(A.CO.O.CH_2)_2CR'.CH_2.O.CH_2.CR'(CH_2.O.CO.A)_2 \quad (II)$$

in which formula $R'$ is $.CH_3$, $.C_2H_5$ or $.CH_2.O.CO.A$, and A is a tertiary alkyl group having 4 to 10 carbon atoms. These esters have been found to be remarkably stable and well suited to the requirements of vacuum pumping in the electronic industry. They have not previously been used in vacuum pumps.

The antioxidant is preferably of the phenolic/amine mixed type containing amine and phenol in approximately equal stoichiometric amounts, for example 2% of alkylated N-phenyl-1-naphthylamine together with 0.5% of di-t-butyl-p-cresol ("butylated hydroxytoluene").

## EXAMPLE 1

An ester mixture consisting of pentaerythritol tetraesters with predominantly heptanoic and octanoic acids as follows:

47% w/w $C(CH_2.O.CO.-n-C_6H_{13})_4$
42% w/w $C(CH_2.O.CO.-iso-C_7H_{15})_4$
11% w/w $C(CH_2.O.CO.-n-C_8H_{17})_4$

was tested for ignition at oxygen pressures up to 11 atmospheres and was found to be stable up to 245°C. The ester mixture was similarly tested after treatment with chlorine, boron trifluoride and aluminium trichloride as representative Lewis acids. Reaction evidently occurred, but stability in the presence of oxygen was not significantly affected except in the case of the ester mixture treated with chlorine which had reduced stability at oxygen pressures above 3 atmospheres.

Using this ester mixture with 2% of alkylated N-phenyl-1-naphthylamine and 0.5% of di-t-butyl-p-cresol as antioxidant in a typical modern rotary pump of the totally immersed vane type, according to the invention, the following vacuum readings were obtained:

0.01 torr by Pirani gauge;
0.0007 torr by McLeod gauge.

## EXAMPLE 2

Used in a typical water-cooled two-stage vacuum diffusion pump with a vane-type backing pump capable of pumping to better than 0.1 torr, the ester mixture with antioxidant described in Example 1 gave stable vacuum readings of between $2 \times 10^{-6}$ torr and $5 \times 10^{-6}$ torr by a direct reading ionisation gauge.

## EXAMPLE 3

An ester of ditrimethylolpropane with 2,2-dimethylpentanoic acid, produced by heating ditrimethylolpropane (30.4 parts by weight) with 2,2-dimethylpentanoic acid (69.6 parts by weight) in the absence of oxygen was found together with phenolic/amine antioxidant as described in Example 1 to have considerably improved properties as a pumping liquid over the ester used in Examples 1 and 2.

When used in the water-cooled two-stage vacuum diffusion pump with a vane type backing pump described in Example 2, it gave vacuum readings of $1 \times 10^{-7}$ to $5 \times 10^{-8}$ torr.

## Claims

1. A method of high vacuum pumping with a pumping liquid in an environment which contains chemically aggressive substances such as halogen or other Lewis acid, ammonia, or a high proportion of oxygen, characterised in that the pumping liquid comprises one or more esters of general formula I:
$R_2C(CH_2.O.CO.A)_2$ (I)
in which formula each R is independently $.CH_3$, $.C_2H_5$, $.CH_2.O.CO.A$ or $.CH_2.O.CH_2.CR'$ - $(CH_2.O.CO.A)_2$ where $R'$ is $.CH_3$, $.C_2H_5$ or $.CH_2.O.CO.A$, and each A is independently alkyl having 4 to 10 carbon atoms, together with 0.2% to 2% by weight of organic antioxidant having vapour pressure of the same order of magnitude as that of the ester.

2. A method as claimed in Claim 1 in which the antioxidant in the pumping liquid is of the phenolic/amine mixed type containing amine and phenol in approximately equal stoichiometric amounts.

3. A method as claimed in Claim 1 or Claim 2 in which A is tertiary alkyl.

4. A method as claimed in Claim 1 or Claim 2 in which the pumping liquid comprises one or more esters of general formula II:
$(A.CO.O.CH_2)_2CR'.CH_2.O.CH_2.CR'$ $(CH_2.O.CO.A)_2$
(II)
in which formula $R'$ is $.CH_3$, $.C_2H_5$ or $.CH_2.O.CO.A$, and A is a tertiary alkyl group having 4 to 10 carbon atoms.

5. A method as claimed in any one of Claims 1 to 4 in which the ester is an ester of ditrimethylolpropane and/or dipentaerythritol with pivalic acid and/or 2,2-dimethylpentanoic acid.

6. A method as claimed in any one of Claims 1 to 5 in which the environment being pumped contains ammonia.

7. A method as claimed in any one of Claims 1 to 5 in which the environment being pumped contains halogen or other Lewis acid.

8. A pumping liquid for high vacuum pumping which comprises one or more esters of general formula II:
$(A.CO.O.CH_2)_2CR'.CH_2.O.CH_2.CR'$ $(CH_2.O.CO.A)_2$
(II)
in which formula $R'$ is $.CH_3$, $.C_2H_5$ or $.CH_2.O.CO.A$, and A is a tertiary alkyl group having 4 to 10 carbon atoms, together with 0.2% to 2% by weight of organic antioxidant having vapour pressure of the same order of magnitude as that of the ester.

9. A pumping liquid as claimed in Claim 8 in which the antioxidant is of the phenolic amine mixed type containing amine and phenol in approximately equal stoichiometric amounts.

10. A pumping liquid as claimed in Claim 8 or Claim 9 in which the ester is an ester of ditrimethylolpropane and/or dipentaerythritol with pivalic acid and/or 2,2-dimethylpentanoic acid.